# EUROPÄISCHE PATENTSCHRIFT

(11) **EP 3 448 299 B1**
(45) Veröffentlichungstag und Bekanntmachung des Hinweises auf die Patenterteilung: **14.07.2021**
(21) Anmeldenummer: 17719606.0
(22) Anmeldetag: 27.04.2017
(51) Int. Cl.: A61C 8/00

(54) **FLEXIBLE DENTALE BASIS ZUR BEFESTIGUNG DENTALER PROTHETISCHER VERSORGUNGEN AUF IMPLANTATEN**
FLEXIBLE DENTAL BASIC STRUCTURE FOR SECURING DENTAL PROSTHETIC FIXTURES TO IMPLANTS
BASE DENTAIRE FLEXIBLE POUR LA FIXATION DE PROTHÈSES DENTAIRES SUR DES IMPLANTS

(30) Priorität: 28.04.2016 DE 102016107930
(43) Veröffentlichungstag der Anmeldung: 06.03.2019
(73) Patentinhaber: Kulzer GmbH, 63450 Hanau (DE)
(72) Erfinder: FUNK, Matthias, 63456 Hanau (DE)
(74) Vertreter: Bendele, Tanja
(86) Internationale Anmeldenummer: PCT/EP2017/060024
(87) Internationale Veröffentlichungsnummer: WO 2017/186834

(56) Entgegenhaltungen:
- EP-A1- 2 491 885
- US-A1- 2008 274 440

## Beschreibung

Die Erfindung betrifft eine flexible dentale Basis zur Befestigung dentaler prothetischer Versorgungen auf Implantaten oder Abutments, und umfasst ein a) Prothesenbasiselement und ein b) hülsenförmiges Passungselement, wobei das Prothesenbasiselement passgenau auf die Implantatstirnseite eines Implantates anbringbar ist, und ein längliches, axial angeordnetes Lumen aufweist, das von der Oberseite bis zur Unterseite des Prothesenbasiselementes verläuft, und wobei das Lumen ausgebildet ist, das hülsenförmige Passungselement aufzunehmen, wobei das Passungselement im Lumen beweglich ist, und das Passungselement weist einen oben am Passungselement am äußeren Umfang verlaufenden oberen Sockel auf sowie einen das Passungselement nach unten begrenzenden Schaft, zwischen dem oberen Sockel und dem Schaft ist eine hülsenförmige äußere Seitenwand mit einem oberhalb des Schaftes am äußeren Umfang nach innen versetzten erste Sockel mit einer Unterseite angeordnet. Ferner weist das Passungselement ein längliches Lumen mit einem nach innen versetzten zweite Sockel, an dem der Durchmesser des Lumens abnimmt, auf, das Lumen verläuft von der Oberseite des Passungselementes bis zur Unterseite. Der obere Sockel des Passungselementes ist auf der Oberseite des Prothesenbasiselementes aufbringbar. Die Höhe der hülsenförmigen äußeren Seitenwand ist geringer als die Höhe des Lumens des Prothesenbasiselementes, sodass die Sockelunterseite des nach innen versetzten ersten Sockels nicht zur Auflage auf die Implantatstirnseite kommt. Ferner ist Gegenstand der Erfindung eine dentale dauerhafte Prothese, umfassend mindestens eine flexible Basis mit a) einem Prothesenbasiselement und ein in das Lumen eingesetztem b) hülsenförmigen Passungselement, und ein im Lumen angeordnetem Befestigungsmittel, sowie eine auf dem Prothesenbasiselement mit Verbindungsmitteln befestigte prothetische Versorgung sowie eine auf die flexible Basis aufbringbare prothetische Versorgung.

Dentalimplantate übernehmen bei Lückensituationen in teilbezahnten oder auch zahnlosen Kiefern die Funktion der Zahnwurzel, um einzelnen Zahnersatz (sog. Aufbauten) oder auch ganze Zahnbrücken mittels Verschraubung befestigen zu können. Hierzu besitzen die Implantate ein Innengewinde, eine meist innenliegende Passungsgeometrie und eine glatte planare oder kegelförmige Stirnfläche. Der darauf aufbauende Zahnersatz wird nun in der Regel so ausgelegt, dass er auf der Stirnfläche dicht aufsitzt, eine in die Passungsgeometrie hineinreichende Geometrie mit möglichst geringem Spiel hat und mittels einer Schraube in das Implantat geschraubt werden kann, insbesondere bei Brücken macht diese innenliegende Passungsgeometrie Schwierigkeiten, da die Einschubrichtungen der Implantate niemals parallel zueinander sind und die Brücken dadurch nicht auf die Implantate gefügt werden könnten. Man behilft sich daher bei direkt verschraubten Implantatbrücken mit vereinfachten Passungsgeometrien, die nur wenige Zehntel Millimeter wie bspw. 1/10 mm bis 6/10 mm in das Implantat hineinreichen und direkt an der Implantatbrücke durch Fräsen hergestellt werden. So werden beispielsweise die I-Bar und I-Bridge von Heraeus Kulzer direkt auf das Implantat verschraubt, und sind nur bedingt geeignet für Zirkon basierte prothetische Versorgungen. Die Passungsgeometrie reicht nur 0,3 bis 0,6 mm in eine innenliegende Passungsgeometrie eines Implantates hinein. Zudem ist eine sehr genaue Ausarbeitung der Verbindungsgeometrie zum Implantat notwendig.

Eine weitere Möglichkeit umfasst die Verwendung von Verbindungselementen, die in das Implantat geschraubt werden und die Einschubrichtung der Implantate parallelisieren. Diese Verbindungselemente verbleiben verschraubt im Implantat. Die Brücke wird wiederum auf diese Elemente aufgeschraubt. So gibt es beispielsweise eine MedentiBase von Medentika oder auch ein System 2-CONnect von NT-Trading. Hier wird die Basis in das Implantat eingeschraubt. Anschließend wir die Brücke auf die Basis geschraubt. Auch diese Anordnung ist nur bedingt für Zirkon basierte prothetische Versorgungen geeignet, da eine doppelte Verschraubung notwendig wird. Auch bei diesem System ist eine sehr genaue Ausarbeitung der Verbindungsgeometrie zwischen der Brücke und der Basis notwendig.

US2008/0274440A1 offenbart ein Abutment mit Kernbereich und Manschette, die beide auf der Stirnseite des Implantates aufliegen. EP2491885A1 offenbart ebenfalls ein Abutment bei dem der innere Bereich auf der Stirnseite des Implantates aufliegt.

Aufgabe der Erfindung war es, eine Basis oder ein System umfassend eine Basis zu entwickeln, das einerseits die Möglichkeit eröffnet, eine Basis auch mit Metalloxid basierten prothetischen Versorgungen zu verbinden. Zugleich sollte eine Möglichkeit entwickelt werden, die auf einfache und wirtschaftliche Weise eine Basis oder ein System bereitstellt, bei dem die Anforderungen an die individuelle Fertigungsgenauigkeit geringer sind, d.h. die Toleranz bei der Fertigung größer sein darf, und zugleich der aufbauende Zahnersatz, d.h. die prothetische Versorgung, über eine Basis flexibler in die innenliegende Passungsgeometrie des Implantates eingeführt werden kann und anschließend mit einer einzigen Schraube in das Implantat geschraubt werden kann. Des Weiteren bestand die Aufgabe, dass die Basis und das System auch für prothetische Versorgungen wie Brücken angewendet werden kann, um die Einschubrichtungen in die innenliegenden Passungsgeometrien der mehreren Implantate, die niemals parallel zueinander liegen, zu ermöglichen.

Gelöst werden die Aufgaben mit einer Basis nach Anspruch 1 sowie einer dentalen Prothese nach Anspruch 8, die die Basis nach Anspruch 1 umfasst und einer an die Basis angepassten prothetischen Versorgung. Vorteilhafte Ausführungsformen werden in den Unteransprüchen sowie detailliert in der Beschreibung erläutert.

Erfindungsgemäß wird eine prothetische Versorgung, insbesondere eine Implantatbrücke, mit einer verklebbaren Basis versehen, die zugleich die Passungsgeometrie zum Implantat herstellt, aber trotzdem das Fügen der Brücke bei nicht parallelen Implantaten möglich macht. Durch den Umstand, dass die Basis mit einer prothetischen Versorgung, insbesondere einer Brücke verklebt werden kann, ist die erfindungsgemäße Basis auch für Metalloxid, wie Zirkondioxid, basierte prothetische Versorgungen, vorzugsweise Zirkondioxidbrücken, geeignet. Der erfindungsgemäße Klebespalt zwischen dem Prothesenbasiselement und der prothetischen Versorgung, vorzugsweise der Brücke, erlaubt höhere Toleranzen bei der Fertigung der Brücke. Auf diese Weise können erfindungsgemäß Ungenauigkeiten beim Scannen durch die Basis und einen gebildeten Klebespalt ausgeglichen werden. Zudem ermöglicht die erfindungsgemäße Basis mit dem Prothesenbasiselement und dem Passungselement die Aufnahme von Kräften radial (Querkräfte) zur Achsrichtung des Implantates. Diese Querkräfte, die zu einem Bruch der Schraube führen könnten, werden erfindungsgemäß minimiert oder vermieden. Zudem kann in einer Vielzahl von Anwendungsfällen durch die flexible dentale Basis auf die Verwendung von Abutments verzichtet werden.

Erfindungsgemäß wird mindestens eine verklebbare, flexible dentale Basis bereitgestellt, die in das jeweilige Verbindungsteil, d.h. die jeweilige Ausnehmung, einer Implantatbrücke eingeklebt werden kann, um diese mit den Implantaten zu verbinden. Die verklebbare Basis ist mehrteilig aufgebaut. Diese flexible dentale Basis besteht aus einem Prothesenbasiselement und einem hülsenförmigen Passungselement. Das Passungselement ist beweglich im Prothesenbasiselement gelagert. Die Verschraubung der flexiblen Basis auf dem Implantat erfolgt mittels einer Implantatschraube, die wiederum durch das Passungselement hindurchgeführt werden kann. Beim Verschrauben drückt der Kopf der Schraube auf einen nach innen versetzten zweiten Sockel des Passungselementes, wodurch das Passungselement mit seinem am äußeren Umfang verlaufenden ersten Sockel auf dem Prothesenbasiselement zu liegen kommt, das wiederum auf der Stirnfläche des Implantates aufliegt. Die Implantatbrücke oder der Implantatsteg kann auf das Prothesenbasiselement der flexiblen dentalen Basis geklebt oder zementiert werden. Das Prothesenbasiselement und das Passungselement der Basis sowie optional eine passende Schraube sind so ausgelegt, dass sie einen leichten Versatz der Einschubrichtung der prothetischen Versorgung, insbesondere einer Brücke, zur Implantatachse ausgleichen können. Beim Verkleben der prothetischen Versorgung, wie einer Brücke, auf den dentalen Basen werden die Basen zuerst locker auf die Implantate des Gipsmodells aufgeschraubt, um dann anschließend die prothetische Versorgung auf die Basen spannungsfrei mit einem Verbindungsmittel festlegen zu können. Vorzugsweise können die Basen und die prothetische Versorgung zementiert werden. Die prothetische Versorgung kann mindestens eine zusätzliche keramische Verblendung aufweisen oder direkt der keramischen Verblendung entsprechen.

Oberhalb der Basis, insbesondere des Passungselementes, ist in der Ausnehmung in der prothetischen Versorgung, insbesondere einer Brücke, ein Hohlraum vorgesehen, der es erlaubt das Passungselement und die Schraube aus dem Implantat, insbesondere der Passungsgeometrie des Implantates, zu ziehen. In diesem zurückgezogenen Zustand von Passungselement und Schraube kann die gesamte Brücke vom Modell oder vom Implantat abgenommen werden. Die prothetische Versorgung ist dann vorzugsweise bereits mit der jeweiligen dentalen Basis verklebt oder zementiert, d.h. mit einem Verbindungsmittel versehen. Die verklebte prothetische Versorgung umfasst die beweglichen Befestigungsmittel, die insbesondere nicht aus der Versorgung fallen können.

Selbst, wenn die Achsrichtungen der Implantate stärker voneinander abweichen (nicht parallele Einschubrichtung der Implantate) kann die prothetische Versorgung von den Implantaten gelöst werden. In dieser Montagestellung wird die prothetische Versorgung, bspw. eine Brücke, später auch im Patientenmund eingesetzt. Beim Verschrauben kommen dann die Passungselemente wieder zum Eingriff in das Implantat. Um mit einem Schraubendreher Zugang zur Schraube zu ermöglichen, ist oberhalb des Hohlraumes ein Kanal in der prothetischen Versorgung vorgesehen. Idealerweise sind Passungselement und Implantatschraube so miteinander verbunden, dass die Schraube nicht herausfallen kann. Dies wird als Verlierschutz bezeichnet. Für das Passungselement ist es vorstellbar, dass die Passungsgeometrie genau die Innenkontur des Implantates abbildet (siehe B-B 1 für ein Implantat mit Innensechskant als Beispiel). Aber auch ein einfacher runder Querschnitt (B-B 2) ist möglich, der mit geringem Spiel in die Innenkontur des Implantates (als Beispiel wieder ein Innensechskant) passt. Dieser Aufbau wäre für Implantatbrücken und Implantatstege ausreichend und weist den Vorteil auf, dass eine Ausrichtung des Passungselementes zur Implantatinnenkontur überflüssig ist. Gleichfalls erlaubt der erfindungsgemäße Aufbau aus dentaler Basis und prothetischer Versorgung auch angewinkelte Schraubenkanäle in der prothetischen Versorgung.

Gegenstand der Erfindung ist eine flexible dentale Basis, insbesondere zur Befestigung dentaler prothetischer Versorgungen, wie Brücken, auf mindestens einem Implantat oder mindestens einem Abutment, wobei die Basis umfasst ein a) Prothesenbasiselement und ein b) hülsenförmiges Passungselement, wobei insbesondere das a) (i) Prothesenbasiselement passgenau auf die Implantatstirnseite eines Implantates anbringbar ist, und/oder (ii) das Prothesenbasiselement ein längliches, axial angeordnetes Lumen aufweist, das von der Oberseite bis zur Unterseite des Prothesenbasiselementes verläuft, wobei das Lumen ausgebildet ist um das b) hülsenförmige Passungselement aufzunehmen, besonders bevorzugt ist das Passungselement im Lumen beweglich, und das b) Passungselement weist einen oben am Passungselement am äußeren Umfang verlaufenden ersten Sockel auf sowie einen das Passungselement nach unten begrenzenden Schaft auf, wobei zwischen dem oberen Sockel und dem Schaft, insbesondere unterem Schaft, ist eine hülsenförmige äußere Seitenwand mit einem oberhalb des Schaftes am äußeren Umfang nach innen versetzten ersten Sockel mit einer Unterseite angeordnet,
- das Passungselement weist ein längliches Lumen mit einem nach innen versetzten zweiten Sockel, an dem der Durchmesser des Lumens abnimmt, auf, das Lumen verläuft von der Oberseite des Passungselementes bis zur Unterseite.

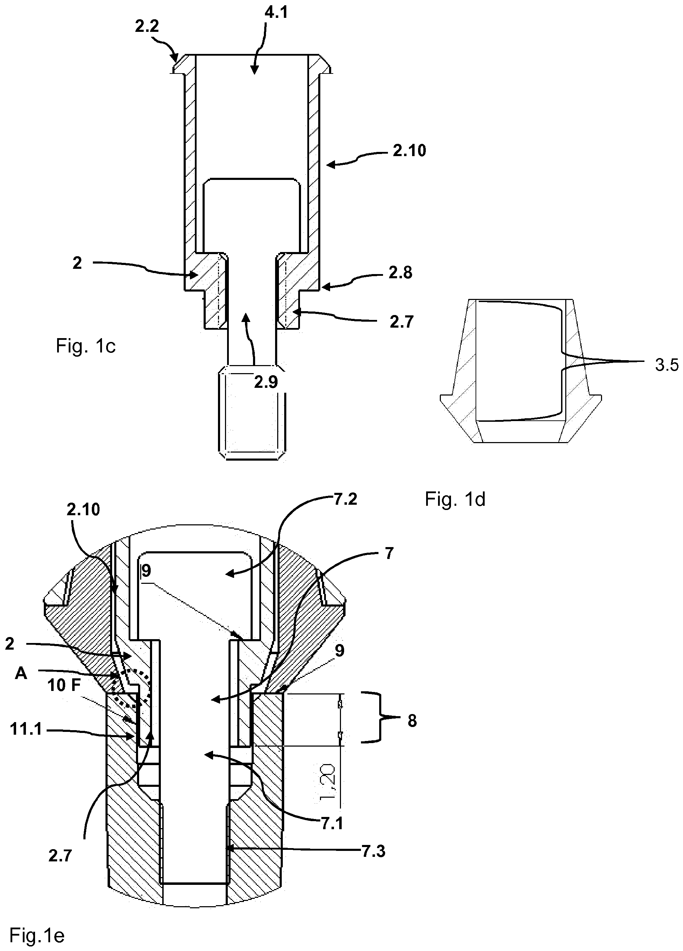

Der untere, nach innen versetzte erste Sockel dient mit seinem dazugehörigen innen umlaufenden Sockel als Auflagefläche für das Befestigungsmittel, während die Sockelunterseite nicht zur Auflage auf die Implantatstirnseite in der Einbausituation kommt. Die äußere Seitenwand kann im unteren Bereich nach innen verjüngt sein und das Lumen des Prothesenbasiselementes kann entsprechend ebenfalls nach innen verjüngt sein, wie in Figur 1e dargestellt.

Ein erfindungsgemäßer Schaft kann von 0,1mm bis 0,3mm, vorzugsweise von 0,3 mm bis 1,5 mm, besonders bevorzugt von 0,8 mm bis 2,5 mm, in die Passungsgeometrie eines Implantates hineingeführt werden. Der Schaft des dargestellten Passungselementes kann 1,20 mm in die Passungsgeometrie eines Implantates hineingeführt werden. Dabei kann der Schaft die nachfolgend genannten Geometrien aufweisen. Die Geometrie des Schaftes kann im Querschnitt: rund, viereckig oder quadratisch, sechseckig, achteckig, grundsätzlich auch vieleckig, rund mit Verdrehschutz am Umfang, sternförmig sein. Ein bevorzugter Verdrehschutz kann vorzugsweise kompatibel zu Nobel Biocare Replace Select sein. Ebenso kann die Geometrie des Schaftes passen zu üblichen Implantatgeometrien bspw. von Bredent Implantat sein.

Der Sockel des Passungselementes kann Durchbrechungen aufweisen. Erfindungsgemäß ist der obere Sockel des Passungselementes auf die Oberseite des Prothesenbasiselementes aufbringbar, insbesondere um die Bildung eines Hohlraumes zwischen der Unterseite des unteren, nach innen versetzten ersten Sockels und der Stirnseite des Implantates zu erlauben.

Durch das Lumen des Passungselementes kann ein Befestigungsmittel, wie eine Schraube, geführt werden. Die Schraube kann mit dem Passungselement über einen Verlierschutz verknüpft sein. Dazu kann beispielsweise das Passungselement im unteren Bereich des Lumens ein axial angeordnetes Lumen mit geringerem Durchmesser und zumindest teilweisem Innengewinde aufweisen. Der Durchmesser des axial angeordneten Lumens kann vorzugsweise um 0,4 bis 2 mm gegenüber dem Lumen vermindert sein. Unter axial wird vorliegend vorzugsweise verstanden, dass die Lumen im Wesentlichen axial in Bezug zu ihrer Längsmittelachse liegen, vorzugsweise liegen sie axial in Bezug zu ihrer Längsmittelachse, weiter bevorzugt bedeutet axial, dass die jeweilige Trajektorie des axialen Lumens im Wesentlichen mit der Längsmittelachse des Implantates zusammenfällt.

Der Schaft des Passungselementes weist vorzugsweise eine zylindrische äußere Form auf, insbesondere eine kreiszylindrische Form oder eine Form mit einer 6- oder 8-Kant-Außengeometrie. Bevorzugte Längen des Schaftes sind von 1 mm bis 10 mm, vorzugsweise von 1 mm bis 6 mm, insbesondere 2 bis 6 mm.

Erfindungsgemäß ist das hülsenförmige Passungselement vertikal im Lumen des Prothesenbasiselementes beweglich, insbesondere auch in dem in der Ausnehmung der prothetischen Versorgung gebildeten Hohlraum, wenn die dentale Basis umfassend Prothesenbasiselement und Passungselement in die prothetische Versorgung eingesetzt ist. Ferner ist das Befestigungsmittel, insbesondere die Schraube, im Lumen und/oder im Hohlraum beweglich, solange sie noch nicht mit dem Implantat verschraubt wurde.

Ferner ist Gegenstand der Erfindung eine Basis, wobei der obere Sockel des Passungselementes auf die Oberseite des Prothesenbasiselementes aufbringbar ist, und die Höhe der Seitenwand geringer bzw. kleiner ist als die Höhe des Lumens, so dass die Sockelunterseite nicht zur Auflage auf die Implantatstirnseite kommt.

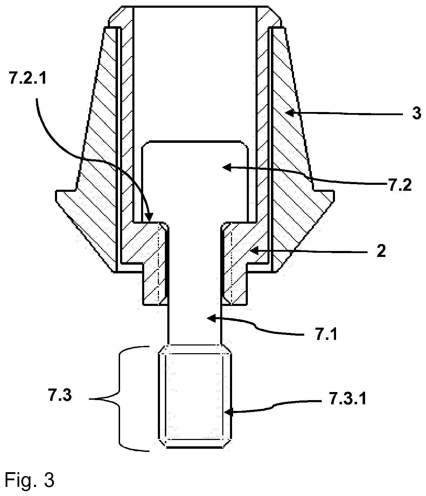

Gleichfalls Gegenstand der Erfindung ist eine Basis mit einem Passungselement, durch dessen Lumen ein Befestigungsmittel mit einem Kopf, wie eine Schraube, einbringbar ist, um die Basis mittels des Passungselementes auf einem Implantat festzulegen, indem der Kopf des Befestigungsmittels auf dem zweiten Sockel zur Auflage kommt und das Befestigungsmittel im Implantat festgelegt wird. Bevorzugte Befestigungsmittel umfassen Schrauben, vorzugsweise Schauben die mindestens im unteren Bereich des Schraubenschaftes ein Außengewinde aufweisen, wie in Figur 3 dargestellt. Dabei bedeutet festlegen, dass die Basis aus Prothesenbasiselement und Passungselement sowohl lösbar, bspw. mit einer Schraube, Bolzen mit Rastung oder Bajonettverschluss, als auch unlösbar auf einem Implantat oder ggf. Abutment befestigt werden kann.

Nach einer weiteren Ausführungsform ist Gegenstand der Erfindung eine Basis mit einem Prothesenbasiselement, dessen äußerer Umfang zwischen der Oberseite und der Unterseite eine definierte Oberfläche aufweist, wobei das Prothesenbasiselement einen am äußeren Umfang umlaufenden Sockel aufweist, insbesondere im Bereich des unteren Drittels. Der Sockel ist vorzugsweise im Bereich des unteren Drittels des Prothesenbasiselementes angeordnet.

Ebenso ist Gegenstand der Erfindung eine Basis mit einem Prothesenbasiselement, das an seinem äußeren Umfang zwischen der Oberseite und der Unterseite eine definierte Oberfläche aufweist, wobei die Oberfläche umfasst (i) eine Oberfläche, insbesondere eine seitliche, äußere Oberfläche des Prothesenbasiselementes, die sich nach unten erweitert, vorzugsweise entspricht die Oberfläche zumindest teilweise der Mantelfläche eines Kegelstumpfes, wobei die theoretische Deckfläche nach oben zeigt. Ferner umfasst die Oberfläche des Prothesenbasiselementes (ii) eine Sockeloberfläche eines Sockels und eine (iii) untere seitliche Oberfläche, die sich nach unten verjüngt, insbesondere entspricht diese Oberfläche zumindest teilweise der Mantelfläche eines Kegelstumpfes, wobei die theoretische Deckfläche nach unten zeigt.

Ferner ist Gegenstand der Erfindung eine Basis mit einem a) Prothesenbasiselement aus einem Material umfassend mindestens ein Metall, eine dentale Legierung, wie Titan, Kobalt-Chrom, Gold, ein Metalloxid, eine dentale Keramik, wie Zirkondioxid, Dilithium-Silikat-Keramik; polymeres Material, wie PEEK, ein gefülltes polymeres Material und/oder eine Anordnung von mindestens zwei der vorgenannten Materialien, und/oder mit einem b) hülsenförmigen Passungselement aus einem Material umfassend mindestens ein Metall, eine dentale Legierung, wie Titan, Kobalt-Chrom, Gold, ein Metalloxid, eine dentale Keramik, wie Zirkondioxid, Dilithium-Silikat-Keramik; polymeres Material, wie PEEK, ein gefülltes polymeres Material und/oder eine Anordnung von mindestens zwei der vorgenannten Materialien.

Nach einer bevorzugten Ausführungsform weist die Basis ein Passungselement auf, das ein längliches, axial angeordnetes Lumen aufweist.
Ferner ist es bevorzugt, wenn das hülsenförmige Passungselement zumindest teilweise im Bereich des Lumens ein Innengewinde aufweist. Durch diese Maßnahme kann die Schraube mit dem Passungselement verschraubt werden und es bildet sich der Verlierschutz. Der Schraubenschaft hinter dem Gewinde kann dazu etwas verjüngt sein, so dass sich die Schraube auf der Länge dieser Verjüngung frei nach oben und unten bewegen lässt, ohne dass die Schraube herausfallen kann.

Gleichfalls Gegenstand der Erfindung ist die Verwendung mindestens eines Befestigungsmittels, wie einer Schraube, mit Verlierschutz in mindestens einem hülsenförmigen Passungselement, insbesondere zur Verwendung in der Basis, bevorzugt zur Verwendung in einer dentalen Prothese, wie einer Brücke. Durch diese Maßnahme kann die prothetische Versorgung, wie vorstehend erläutert, auf dem Modell aufgeschraubt und das Prothesenbasiselement mit der prothetischen Versorgung mit einem Verbindungsmittel fest verbunden werden, wie verklebt oder zementiert werden. Anschließend kann die mindestens eine Schraube gelöst werden, um das mindestens eine Passungselement in den Hohlraum zurückzuziehen. Sobald alle Passungselemente in die Hohlräume zurückgezogen worden sind, kann die dentale Prothese von den Implantaten oder Laboranalogen abgenommen werden. Die Schrauben können auf Grund des Verlierschutzes nicht aus den Passungselementen herausfallen.

Vorzugsweise ist das Befestigungsmittel eine Schraube mit einem Schraubenkopf, wobei der Schraubenkopf eine untere Auflagefläche aufweist, und unterhalb des Schraubenkopfes ein Schaft angeordnet ist, an dessen terminalen Ende ein Außengewinde angeordnet ist, insbesondere passt das Außengewinde in ein Innengewinde einer Anschlussgeometrie eines dentalen Implantates und/oder dient als Verlierschutz der im Passungselement angeordneten Schraube.

Ferner ist Gegenstand eine dentale Prothese, insbesondere eine dauerhafte dentale Prothese, umfassend mindestens eine vorgenannte flexible Basis, wobei die mindestens eine Basis ein a) Prothesenbasiselement und ein in das Lumen eingesetztes b) hülsenförmiges Passungselement umfasst, und ein im Lumen angeordnetes Befestigungsmittel, wie eine Schraube, sowie eine auf dem Prothesenbasiselement der mindestens einen Basis mit Verbindungsmitteln befestigte prothetische Versorgung aufweist. Nach alternativen Ausführungsformen kann die dentale Prothese eine prothetische Versorgung, vorzugsweise aus Zirkondioxid, und mindestens zwei bis 16 flexible Basen, vorzugsweise 2, 3, 4, 5, 6, 7, 8, 9, 10, 11, 12, 13, 14, 15, 16 Basen, optional jeweils mit einem Befestigungsmittel, umfassen. Vorzugsweise ist umfasst die dentale Prothese als prothetische Versorgung, eine dentale Brücke, eine Superstruktur, einen Implantatsteg oder eine Krone.

Nach einer weiteren Alternative kann jeweils unabhängig eine Basis als Befestigungsmittel eine Schraube in der dentalen Prothese umfassen, insbesondere eine Schraube mit einem Schaft, wobei im terminalen Bereich des Schaftes ein Außengewinde vorgesehen sein kann.

Bevorzugte Materialien der prothetischen Versorgung in der dentalen Prothese umfassen mindestens ein Metall, eine dentale Legierung, wie Titan, Kobalt-Chrom, Gold, ein Metalloxid, eine dentale Keramik; wie Zirkondioxid, Dilithium-Silikat-Keramik; polymeres Material, wie PEEK, ein gefülltes polymeres Material und/oder eine Anordnung von mindestens zwei der vorgenannten Materialien. Besonders bevorzugt sind Zikrondioxid und Aluminiumoxid enthaltende Prothesen.

Vorzugsweise ist das Verbindungsmittel in einem Klebespalt zwischen zervikaler Aufnahme und seitlicher, äußerer Oberfläche angeordnet. Der Klebespalt kann 10 bis 100 µm, vorzugsweise 10 bis 40 µm, weiter bevorzugt 10 bis 30 oder alternativ 30 bis 40 µm betragen.

Bevorzugte Verbindungsmittel umfassen a) mindestens eine Schicht eines Adhäsivs auf der Oberfläche des Prothesenbasiselementes, insbesondere auf der seitlichen, äußeren Oberfläche, und optional der Sockeloberfläche des Prothesenbasiselementes und auf der inneren Oberfläche der Aufnahme der prothetischen Versorgung, insbesondere der zervikalen inneren Oberfläche der Aufnahme, oder b) einen Verbund umfassend (i) ein erstes Adhäsivs auf der Oberfläche des Prothesenbasiselementes, insbesondere auf der seitlichen, äußeren Oberfläche, und optional der Sockeloberfläche des Prothesenbasiselementes und optional der Sockeloberfläche des Prothesenbasiselemtens, oder (ii) auf dem ersten Adhäsiv ein Komposit-Zement, und (iii) ein zweites Adhäsiv auf dem Komposit-Zement und auf der inneren Oberfläche der Aufnahme der prothetischen Versorgung, insbesondere der zervikalen inneren Oberfläche der Aufnahme.

Vorzugsweise ist in der Prothese das b) hülsenförmige Passungselement vertikal b) im Lumen des Prothesenbasiselementes bewegbar, insbesondere im Hohlraum, der gebildet wird in der Ausnehmung in der prothetischen Versorgung. Dabei ist es weiter bevorzugt, wenn auch das Befestigungsmittel im Lumen und/oder im Hohlraum beweglich ist.

Gegenstand der Erfindung ist ebenso eine Prothese zur Verwendung zur Befestigung auf mindestens einem enossalen Implantat, insbesondere auf zwei bis 16 enossalen Implantaten oder Laboranalogen, vorzugsweise auf vorzugsweise 2, 3, 4, 5, 6, 7, 8, 9, 10, 11, 12, 13, 14, 15, 16.

Gleichfalls Gegenstand der Erfindung ist ein Kit, umfassend mindestens ein Prothesenbasiselement und mindestens ein hülsenförmiges Passungselement jeweils als flexible, dentale Basis, insbesondere umfasst das Kit 2 bis 33 flexible Basen, sowie optional mindestens eine prothetische Versorgung und vorzugsweise mindestens ein Befestigungsmittel je Basis. Ferner kann das Kit umfassen mindestens ein Adhäsiv, insbesondere ein Schwefel und/oder Stickstoff haltiges Adhäsiv und/oder organofunktionelle Silane umfassendes Adhäsiv und optional einen dentalen Zement. Das Adhäsiv umfasst vorzugsweise mindestens ein polymerisierbares Monomer umfassend (Meth)acrylat und/oder Derivate von (Meth)acrylaten.

Gleichfalls Gegenstand der Erfindung ist eine prothetische Versorgung, umfassend mindestens eine zervikale Aufnahme, umfassend die Ausnehmung zur Aufnahme der erfindungsgemäßen Basis sowie einen in der prothetischen Versorgung von der Ausnehmung nach lingual führenden Kanal, insbesondere Schraubenkanal, wobei der Kanal im Übergang zur Ausnehmung einen Durchmesser (D1) und im lingualen Bereich einen weiteren Durchmesser (D2) aufweist, und wobei der eine Durchmesser (D1) größer ist als der weitere Durchmesser (D2). Dabei kann der nach lingual führende Kanal zumindest teilweise axial in der prothetischen Versorgung angeordnet sein oder alternativ zumindest teilweise gegenüber der axialen Anordnung in der prothetischen Versorgung nach lingual geneigt sein. Der weitere Durchmesser (D2) des Kanals kann einen geringeren Durchmesser als ein Schraubenkopf aufweisen, da die Schraube in das Passungselement eingesetzt werden kann, bevor die prothetische Versorgung mit dem Prothesenbasiselement dauerhaft verbunden wird. Es ist ausreichend, wenn ein Schraubendreher durch den Durchmesser (D2) hindurchgeführt werden und mit diesem die Schraube in das Implantat hineingeschraubt werden kann. Der Durchmesser (D1) entspricht vorzugsweise dem Durchmesser der Ausnehmung in der prothetischen Versorgung. Der Kanal kann gebogen, geneigt, zumindest teilweise zylindrisch sein oder auch eine Ausbuchtung aufweisen, in der ein Schraubendreher zum Schraubenkopf geführt wird. Die prothetische Versorgung umfasst vorzugsweise eine dentale Brücke, eine Superstruktur, einen Implantatsteg oder eine Krone, eine Implantat getragene dentale Prothese, vorzugsweise eine Implantat getragene Brücke, eine Implantat getragene Superstruktur, eine Implantat getragene Krone.
In einer bevorzugten Ausführungsform kann die prothetische Versorgung mindestens zwei, insbesondere drei bis 10 zervikale Aufnahmen umfassen, wobei jede Aufnahme unabhängig eine Ausnehmung zur Aufnahme jeweils einer erfindungsgemäßen Basis aufweist sowie einen nach lingual oder okklusal führenden Kanal je Ausnehmung, wobei mindestens ein Kanal dieser Kanäle in der prothetischen Versorgung von der Ausnehmung nach lingual führt, wobei mindestens dieser Kanal im Übergang zur Ausnehmung einen Durchmesser (D1) und im lingualen Bereich einen weiteren Durchmesser (D2) aufweist, und wobei der eine Durchmesser (D1) größer ist als der weitere Durchmesser (D2). Die weiteren Aufnahmen mit Ausnehmung zur Aufnahme jeweils einer erfindungsgemäßen Basis können einen von der Ausnehmung nach okklusal oder nach lingual führenden Kanal aufweisen. Die Kanäle sind vorzugsweise Schraubenkanäle. Vorzugsweise kann jeder Kanal unabhängig von den anderen Kanälen jeweils einen Durchmesser (D1) aufweisen, der größer ist als der jeweilige Durchmesser (D2) dieses Kanals.

In einer Alternative weisen mindestens zwei Kanäle jeweils unabhängig voneinander im Übergang zur Ausnehmung einen Durchmesser (D1) und im okklusalen oder lingualen Bereich einen weiteren Durchmesser (D2) auf, und wobei der jeweilige Durchmesser (D1) größer ist als der weitere Durchmesser (D2). Die prothetische Versorgung mit zwei bis 10 Aufnahmen ist vorzugsweise eine dentale mehrgliedrige Brücke, eine Superstruktur oder ein Implantatsteg. Besonders bevorzugt ist die prothetische Versorgung eine Implantat getragene dentale Prothese, wie eine Implantat getragene mehrgliedrige Brücke oder eine Implantat getragene Superstruktur.

Dabei kann der jeweilige nach lingual führende Kanal zumindest teilweise axial in der prothetischen Versorgung angeordnet sein oder alternativ zumindest teilweise gegenüber der axialen Anordnung in der prothetischen Versorgung nach lingual geneigt sein. Der jeweilige weitere Durchmesser (D2) des jeweiligen Kanals kann einen geringeren Durchmesser als ein Schraubenkopf aufweisen, da die Schraube in das Passungselement eingesetzt werden kann, bevor die prothetische Versorgung mit dem Prothesenbasiselement dauerhaft verbunden wird. Der jeweilige Durchmesser (D1) kann vorzugsweise dem Durchmesser der Ausnehmung in der prothetischen Versorgung entsprechen. Der jeweilige Kanal kann gebogen, geneigt, zumindest teilweise zylindrisch sein oder auch eine Ausbuchtung aufweisen, in der ein Schraubendreher zum Schraubenkopf geführt wird.

Des Weiteren ist Gegenstand der Erfindung eine prothetische Versorgung mit mindestens zwei, insbesondere drei bis 10 zervikale Aufnahmen, wobei jede Aufnahme unabhängig eine Ausnehmung zur Aufnahme jeweils einer erfindungsgemäßen Basis ausweist, und wobei in jeder Ausnehmung eine Basis umfassend ein Prothesenbasiselement und ein hülsenförmiges Passungselement angeordnet ist.

Als ein dentales enossales Implantat wird vorliegend vorzugsweise ein im Kiefer eines Patienten befindliches Implantat oder ein Laboranalog des Implantates im realen oder virtuellen Modell des Kiefers verstanden.

Des Weiteren kann es bevorzugt sein, dass die Oberflächen des Prothesenbasiselementes, des Passungselementes und/oder der mindestens einen Ausnehmung der prothetischen Versorgung jeweils unabhängig voneinander zumindest teilweise mit einer rauen Oberflächenstruktur versehen sind. Als raue Oberflächenstruktur gilt eine Oberfläche, die in der Regel eine Rauigkeit von größer gleich 3,2µm, insbesondere von größer gleich 3,2µm bis 12µm aufweist. Vorzugsweise kann eine Fläche der Seitenwand und optional die Oberseite des Schaftes mit einer rauen Oberflächenstruktur versehen sein. Zur Veränderung der Oberfläche bieten sich an Pulverbeschichtung, Sandstrahlen, Ätzen, Corona Behandlung etc., ohne die Verfahren auf diese Verfahren beschränken zu wollen.

Das Material des erfindungsgemäßen Prothesenbasiselementes, des Passungselementes, prothetischer Versorgung, wie Brücke, Superstruktur, Krone etc., und/oder der mindestens einen Ausnehmung der prothetischen Versorgung oder entsprechender provisorischer Prothesenbasiselemente, provisorischer Passungselemente und/oder provisorischer prothetischen Versorgungen kann jeweils unabhängig ausgewählt sein aus: einem polymeren Material, gefülltem polymeren Material, Metall, einer Legierung, wie Titan, Kobaltchrom, Gold, einem Faserverstärktem Polymer, Hybridmaterial, wobei das polymere Material ausgewählt sein kann aus Fluorpolymeren, Polysulfid enthaltenden Polymeren, Polysulfon enthaltenden Polymeren, Polyaryletherketonen, Polyimiden, PAEK (Polyaryletherketonen), PEEK (Polyetheretherketonen, 4-Hydroxyphenyl(4-phenoxyphenyl)methanon), PEK (Polyetherketonen); PEKK (Poly(etherketonketonen)), PEEEK (Poly(etheretheretherketonen)), PEEKK (Poly(etheretherketonketonen)), PEKEKK (Poly(etherketonetherketon-ketonen)); PES (Polyarylsulfonen), PPSU (Polyarylsulfonen), PSU (Polysulfonen), PPS (Polyphenylensulfiden), PFA (Perfluoralkoxy-Polymeren), PFE (Poly(fluorenylenethylen)polymeren); PVDF (Polyvinylidenfluoriden), PCTFE (Polytetrafluoroethylen), PAI (Polyamideimiden); PI (Polyimiden), PEI (Polyetherimiden), PBI (Polybenz-imidazolen). Bevorzugt können als metallische Legierungen oder Metalle Kobaltchrom, Titan, Gold etc. verwendet werden.

Die in den nachfolgenden Figuren dargestellten Ausführungsformen stellen beispielhafte erfindungsgemäße Gegenstände dar, ohne die Erfindung auf diese Gegenstände zu beschränken.

Die Figuren stellen dar
**Fig. 1a****:** Dentale Prothese 0 mit prothetischer Versorgung 6 mit Basis 1 gemäß Figur 1b.
**Fig.1b****:** Erfindungsgemäße Basis 1
**Fig. 1c****:** Hülsenförmiges Passungselement 2.
**Fig. 1d****:** Prothesenbasiselement 3
**Fig. 1e****:** Ausschnitt eines hülsenförmigen Passungselementes 2 mit Hohlraum A und Kontaktpunkt/Kontaktfläche 9 sowie Formschluss F im Bereich 8
**Fig. 1f****:** Dentale Prothese 0 mit eingeklebtem Prothesenbasiselement 3 im nicht verschraubten Zustand auf Implantat 11.
**Fig. 1g****:** Dentale Prothese 0 mit eingeklebtem Prothesenbasiselement 3 im verschraubten Zustand auf Implantat 11.
**Fig. 2a**:Prothesenbasiselement 3 mit Implantat
**Fig.2b****:** Ansicht quer zu Ebene B-B, zylindrisch
**Fig.2c****:** Ansicht quer zu Ebene B-B, Polyeder
**Fig. 3****:** Verlierschutz des Befestigungsmittels 7 mit Höhe des Lumens 3.5
**Fig. 4****:** Stand der Technik mit Formschluss F (0,40 mm) und Kontaktpunkt/Kontaktfläche K
**Fig. 5****:** Dentale Prothese 0 mit prothetischer Versorgung 6
**Fig. 6a****:** Passungselement mit konisch zulaufendem erstem Sockel 2.8
**Fig. 6b****:** Passungselement mit Innengewinde 2.6.1.

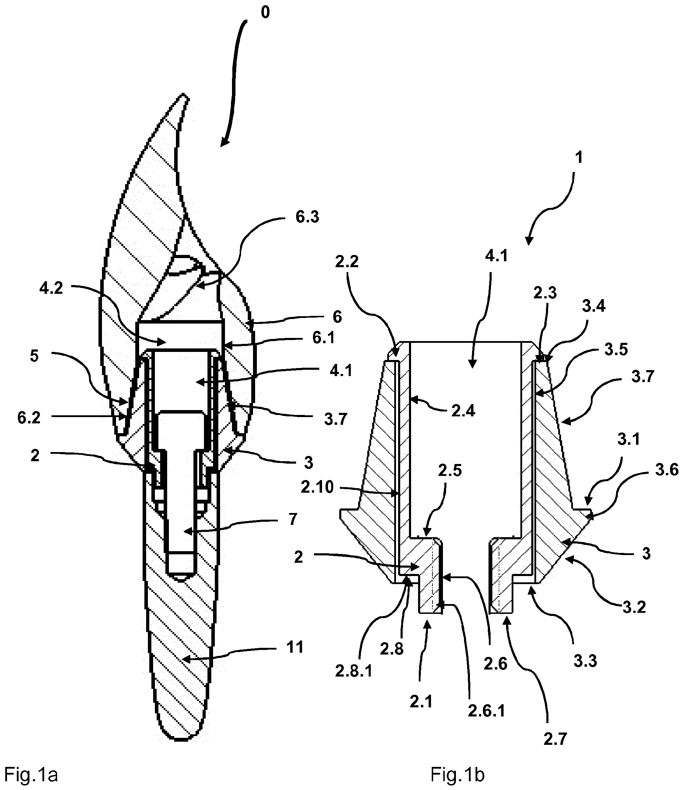

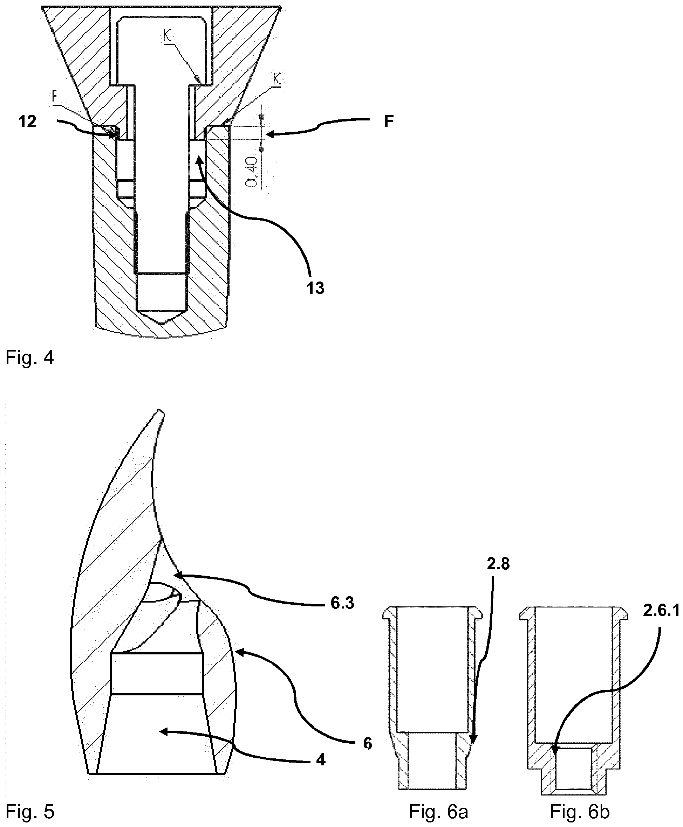

**Figuren 1a** und **5** stellen dar eine dentale Prothese **0** mit prothetischer Versorgung **6** mit lingualem Kanal **6.3** die in **Fig. 1a** mittels eines Verbindungsmittels **5** mit der seitlichen, äußeren Oberfläche **3.7** des Prothesenbasiselementes **3** der flexiblen dentalen Basis **1 (****Fig. 1b****)** und einem hülsenförmigen Passungselement **2** sowie einem Befestigungsmittel **7** auf einem Implantat **11** festgelegt ist. Ferner ist der Hohlraum **4.1** in der Ausnehmung **2.4** dargestellt. Die Unterseite **2.1** sowie der Schaft werden in die Passungsgeometrie eines Implantates eingeführt. Die prothetische Versorgung **6** weist eine zervikale Aufnahme **6.2** mit einer Ausnehmung **6.1** auf. Ferner sind der Hohlraum **4.2,** der sich in der Ausnehmung **6.1** oberhalb der Basis **1** in der prothetischen Versorgung **6** bildet, sowie der Hohlraum **4.1** in der Ausnehmung **2.4 (****Fig. 1b****)** dargestellt sowie der nach lingual führende Kanal **6.3,** der als Schraubendreherkanal dient. Aufgrund des erfindungsgemäßen Aufbaus kann die linguale Öffnung eine kleinere Dimension als der Schraubenkopf aufweisen.

Das Prothesenbasiselement **3** und/oder die flexible dentale Basis **1** kann vorzugsweise mit einem der folgenden Verbindungsmittel mit einer prothetischen Versorgung **6** fest verbunden werden.

| Prothesenbasiselement **3** | Verbindungsmittel **5** | prothetischen Versorgung **6** |
|---|---|---|
| Ti | Signum metal bond I+II, Signum zirconia bond 1+2, dazwischen einen Komposit-Zement, wie z.B. iCem | ZrO₂ |
| Ti | Jeweils Signum metal bond I+II, dazwischen einen Komposit-Zement, wie z.B. iCem | Ti |
| CoCr | Signum metal bond I+II2, Signum zirconia bond I+II, dazwischen einen Komposit-Zement, wie z.B. iCem | ZrO₂ |
| CoCr | Jeweils Signum metal bond I+II, dazwischen einen Komposit-Zement, wie z.B. iCem | CoCr |
| Ti | Jeweils Signum metal bond I+II, dazwischen einen Komposit-Zement, wie z.B. iCem | CoCr |

| | | |
|---|---|---|
| Ti: Titan; ZrO₂: Zirkoniumdioxid; CoCr: Cobalt-Chrom), I+II: zunächst wird I aufgetragen und trocknen gelassen, anschließend wird II aufgetragen. | | |

Denkbar und praxisgerecht sind alle Kombinationen, wenn auch die Kombinationen Ti mit ZrO2 und CoCr mit ZrO2 den bevorzugten Einsatz beschreiben.

**Fig.1b** zeigt eine erfindungsgemäße Basis **1** umfassend ein dentales Passungselement **2** (Hülse) und ein dentales Prothesenbasiselement **3.** Das hülsenförmige Passungselement **2** weist ein längliches axial angeordnetes Lumen **2.4** mit einem inneren, umlaufenden zweiten Sockel **2.5** auf. Der zweite Sockel ist vorzugsweise im Bereich des unteren Drittels des Lumens angeordnet. An den zweiten Sockel schließt sich zervikal ein längliches axial angeordnetes Lumen **2.6** mit einem geringeren Durchmesser als **2.4** an. Das Lumen weist im Bereich des Schaftes vorzugsweise ein Innengewinde **2.6.1** auf. Im oberen Bereich des Lumens **2.4** befindet sich ein äußerer umlaufender oberer Sockel **2.2,** der auf der Oberseite **3.4** des PBE **3** zum Liegen kommt und dort den Kontaktpunkt/Kontaktfläche bildet. Die äußere Seitenwand **2.10** des Passungselementes weist eine geringere Höhe auf als die Höhe des länglichen Lumens **3.5,** so dass die Unterseite des ersten Sockels **2.8** nicht auf der Stirnseite des Implantates aufliegt, wenn die untere Oberfläche **2.3** des oberen Sockels **2.2** auf der Oberseite des PBE anliegt. Ferner weist das Prothesenbasiselement (PBE) 3 eine seitliche, äußere Oberfläche **3.7,** einen Sockel **3.6** mit Sockeloberfläche **3.1** und eine untere, seitliche Oberfläche **3.2** sowie eine Unterseite **3.3** auf.

Die **Figuren 1c, 1d** und **6a** und **6b** zeigen das hülsenförmige Passungselement **2,** dessen äußere Seitenwand eine geringere Höhe als die Höhe des Lumens **3.5** des PBEs **3** aufweist, so dass die Sockelunterseite **2.8.1** des ersten Sockels **2.8** nicht auf der Implantstirnfläche aufliegen kann. Der erste Sockel **2.8** begrenzt die Seitenwand **2.10.** Ferner ist der Schaft **2.7** mit Durchführung **2.9** in das Lumen dargestellt, der in die Passungsgeometrie des Implantates eingreift. Der Hohlraum **4.1** und die Durchführung sind ausgebildet, um ein Befestigungsmittel in die Hülse einzubringen und auf einem Implantat verschrauben zu können. **Fig. 6a** stellt dar ein Passungselement mit konisch zulaufendem ersten Sockel **2.8** und **Fig. 6b** mit Innengewinde 2.6.1. **Figur 1e** zeigt einen Ausschnitt eines hülsenförmigen Passungselementes **2** mit Hohlraum **A** und Kontaktfläche **9** sowie Formschluss **10/F** im Bereich **8,** in dem das Passungselement **2** und das Implantat **11** vertikal gegeneinander beweglich sind. Der dargestellte Formschluss **10/F** des Schaftes **2.7** und der Passungsgeometrie des Implantates beträgt etwa 1,20 mm. Daher bewirkt die erfindungsgemäße Geometrie eine deutliche stabilere Verbindung zwischen Implantat und Passungselement. Nach einer bevorzugten Ausführungsform kann die äußere Seitenwand **2.10** gemäß **Figur 1e** zumindest teilweise konisch nach zervikal zulaufen. Alternativ kann die Seitenwand parallel ausgebildet sein. Ferner ist ein Befestigungsmittel **7** mit Schraubenkopf **7.2,** Schraubenschaft **7.1** und unterem Bereich des Schaftes mit Außengewinde **7.3** dargestellt. Demgegenüber stellt **Figur 4** den Stand der Technik dar, in dem der Bereich des Formschlusses **F** der Geometrie **12** in der Passungsgeometrie **13** des Implantates lediglich 0,40 mm beträgt. Ferner weist diese Geometrie des Standes der Technik zwei verschiedene Kontaktpunkte/-flächen K auf.

Der Vorteil der Erfindung besteht darin, den Bereich des Formschlusses deutlich zu vergrößern. Bei einer bekannten I-Bridge, wird die Verbindung im Wesentlichen über die Kontaktstellen durch Kraftschluss (K) hergestellt. Formschluss (F) findet nicht oder nur in einem sehr kleinen Bereich statt, indem ein Ring wenige 1/10 mm in das Implantat ragt. Bei den erfindungsgemäßen dentalen Basen **1** wird der Bereich des Formschlusses erheblich vergrößert, wie in **Figur 1e** dargestellt.

Bei den bekannten I-Bridges ist ein tieferes Eintauchen des Ringes nicht möglich, da bei verschiedenen Achsrichtungen der Implantate die Brücke nicht mehr gefügt werden kann. Mithilfe der flexiblen dentalen Basis mit beweglichem Passungselement lässt sich nun der Ring, hier Schaft **2.7,** während des Aufsetzens der Brücke in die Implantate absenken. Ein weiterer Vorteil der Anordnung ist es, dass die Bauteile in sich ein leichtes Spiel quer zur Schraubenachse haben, wodurch Fertigungstoleranzen in der Brücke in Bezug auf die Implantatpositionen ausgeglichen werden können.

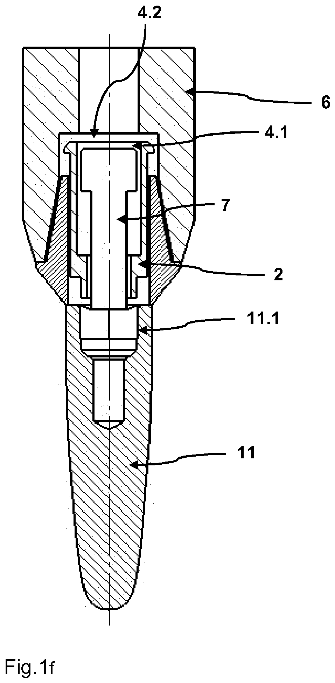

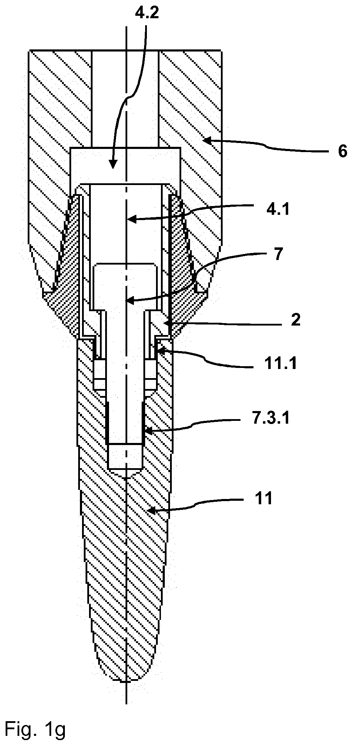

Die **Figuren 1f** und **1g** stellen dar, die dentale Prothese **0** mit eingeklebtem Prothesenbasiselement **3** und Passungselement **2** im nicht verschraubten Zustand **(****Fig. 1f****)** auf einem Implantat **11** und im verschraubten Zustand **(****Fig. 1g****).** In **Figur 1f** ist die herausgezogene Schraube **7** dargestellt, die alleine oder zusammen mit dem Passungselement **2** in den Hohlraum **4.2** hochgezogen dargestellt ist. Der Hohlraum **4.2** bildet sich nach dem Einsetzen der Basis in die prothetische Versorgung **6** und dient als "Manövrier-Hohlraum" in den das Passungselement hochgezogen werden kann, um das Befestigungsmittel während der Positionierung auf den Implantaten ausrichten zu können. Die prothetische Versorgung **6** ist mit dem Prothesenbasiselement mit einem Verbindungsmittel verklebt oder mit Zement mit diesem verbunden. In **Figur 1g** ist die Schraube **7** mit dem Außengewinde **7.3.1** im Implantat **11** mit Passungsgeometrie **11.1** fest verschraubt. Oberhalb der Schraube **7** ist der Hohlraum **4.1** in der Ausnehmung **2.4** sowie der Hohlraum **4.2** in der prothetischen Versorgung **6** dargestellt.

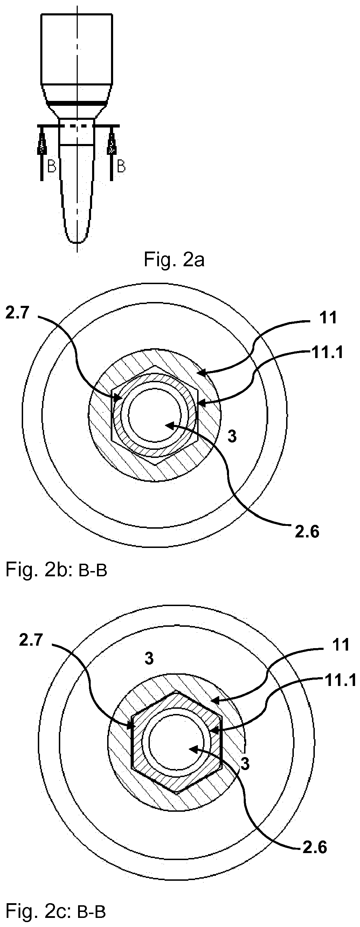

Die **Figuren 2a** bis **2c** zeigen ein Prothesenbasiselement **3** mit Implantat **11.** Die **Figuren 2b** und **2c** stellen einen Querschnitt auf die Ebene B-B eines zylindrischen Schaftes **2.7 (****Fig. 2b****)** des Passungselementes in einer Sechskant-Innen-Passungsgeometrie **11.1** eines Implantates **11** und mit einem Sechskant Schaft **2.7 (****Fig. 2c****)** des Passungselementes in einem Prothesenbasiselement **3** dar.

In **Figur 3** ist ein Verlierschutz des Befestigungsmittels mit Höhe des Lumens des Prothesenbasiselementes **3** mit eingesetztem Passungselement **2** dargestellt, wobei das Befestigungsmittel eine Schraube mit Schraubenkopf **7.2,** Schaft **7.1** und Außengewinde im unteren Bereich **7.3.1** ist. Die Schraube weist eine untere Auflagefläche **7.2.1** auf. Am terminalen Ende **7.3** des Schaftes **7.1** ist ein Außengewinde **(7.3.1)** angeordnet, insbesondere passt das Außengewinde in ein Innengewinde einer Passungsgeometrie eines dentalen Implantates und/oder dient als Verlierschutz der im Passungselement angeordneten Schraube. Das Passungselement **2** weist ein Gewinde im Durchgangsloch für die Schraube auf. Die Schraube wird zur Vormontage durch das Passungselement geschraubt. Der Schraubenschaft hinter dem Gewinde **7.3.1** ist etwas verjüngt, so dass sich die Schraube auf der Länge dieser Verjüngung frei nach oben und unten bewegen lässt, ohne dass die Schraube herausfallen kann. Die Funktion der Schraube bleibt unverändert. Sie wird bei der Montage der Brücke, wie bei den anderen Darstellungen, in das Implantat geschraubt.

### Bezugszeichen:

0 dentale dauerhafte Prothese umfassend mindestens eine flexible Basis und eine prothetische Versorgung, die mit einem Verbindungsmittel mit der mindestens eine Basis fest verbunden ist sowie vorzugsweise mit einem Befestigungsmittel je Basis
1 flexible Basis umfassend ein dentales Passungselement 2 und eine dentales Prothesenbasiselement 3
2 hülsenförmiges Passungselement (Hülse)
2.1 Unterseite
2.2 oberer Sockel, insbesondere umlaufender Sockel
2.3 untere Oberfläche des Sockels 2.2
2.4 längliches axial angeordnetes Lumen
2.5 innerer umlaufender Sockel im länglichen Lumen (2.4, 2.6): Nach innen versetzter zweiter Sockel (2.5) an dem der Durchmesser des Lumens (2.6) des Passungselementes abnimmt
2.6 längliches axial angeordnetes Lumen mit geringerem Durchmesser als 2.4, 2.6.1 Innengewinde
2.7 Schaft, als unterer Schaft, insbesondere mit kreiszylindrischem äußeren Umfang oder polygonalem äußeren Umfang, wie insbesondere mit Innen-6- oder 8-Kant Anschlussgeometrie
2.8 Sockel mit 2.8.1 Sockelunterseite: Am äußeren Umfang nach innen versetzter erster Sockel (2.8) mit einer Unterseite (2.8.1)
2.9 Durchführung
2.10 äußere Seitenwand des Passungselementes 2 (Hülse)
3 dentales Prothesenbasiselement (PBE, Abutment Base)
3.1 Sockeloberfläche
3.2 untere seitliche Oberfläche des Prothesenbasiselementes (PBE)
3.3 Unterseite des Prothesenbasiselementes (PBE)
3.4 Oberseite PBE
3.5 Höhe des Lumens, längliches Lumen mit innerer Oberfläche PBE
3.6. Sockel / Schulter
3.7 seitliche, äußere Oberfläche PBE
4 gesamter Hohlraum in Ausnehmung 2.4 und in 6 im Bereiche der Ausnehmung 6.1
4.1 Hohlraum in Ausnehmung 2.4
4.2 Hohlraum - "Manövrier-Hohlraum"
5 Verbindungsmittel, insbesondere umfassend Haftmittel, Klebemittel, dentaler Zement
6. dentale prothetische Versorgung, insbesondere Superstruktur, Brücke, Implantatsteg, vorzugsweise prothetische Implantat getragene Versorgung, insbesondere mit nach lingual führendem Kanal. Wie eine prothetische Implantat getragene Versorgung umfassend eine Superstruktur, eine Brücke oder einen Implantatstegmit mindestens zwei Prothesenbasiselementen (3), die jeweils ein hülsenförmiges Passungselement (2) aufweisen.
6.1 Ausnehmung in 6, die angepasst ist, so dass das Passungselement 2 vertikal in der Ausnehmung beweglich ist und, insbesondere auch die Schraube 7 darin beweglich ist,
6.2 Aufnahme umfassend die Ausnehmung 6.1 zur Aufnahme der flexiblen Basis 1, zervikale Aufnahme
6.3 nach lingual führender Kanal, verwendet als Schraubendreherkanal
7 Befestigungsmittel, wie Schraube
7.1 Schaft der Schraube
7.2 Schraubenkopf, 7.2.1 Auflagefläche der Schraube
7.3 unterer Bereich des Schaftes der Schraube mit Außengewinde 7.3.1
8 Bereiche in dem Passungselement 2 und Implantat 11 vertikal gegeneinander beweglich sind
9 Kontaktpunkt bzw. ringförmige Kontaktfläche (K) mit Kraftschluss
10 Formschluss
11 Implantat, 11.1 Passungsgeometrie Implantat bspw. Innen-6- oder 8-Kant Anschlussgeometrie
12 Geometrie (Vergleichsbeispiel)
13 Passungsgeometrie (Vergleichsbeispiel)
A Hohlraum zwischen Unterseite des unteren Sockels 2.8 und der Stirnseite des Implantates 11 (Fig. 1e)
B_B axiale Ebene der flexiblen Basis und des Implantates
F Formschluss (Fig. 1e, 1,20 mm, Fig. 4: 0,40 mm)

## Patentansprüche

1. Flexible dentale Basis (1) zur Befestigung dentaler prothetischer Versorgungen (6) auf mindestens einem Implantat (11) oder Abutment, wobei die Basis (1) umfasst
a) ein Prothesenbasiselement (3) und
b) ein hülsenförmiges Passungselement (2), und wobei das
Prothesenbasiselement (3) passgenau auf die Implantatstirnseite eines Implantates anbringbar ist, und ein längliches, axial angeordnetes Lumen (3.5) aufweist, das von der Oberseite (3.4) bis zur Unterseite (3.3) des Prothesenbasiselementes (3) verläuft,
- wobei das Lumen (3.5) ausgebildet ist, das hülsenförmige Passungselement (2) aufzunehmen, und das
Passungselement (2) weist einen oben am Passungselement (2) am äußeren Umfang verlaufenden oberen Sockel (2.2) auf sowie einen das Passungselement nach unten begrenzenden Schaft (2.7),
zwischen dem oberen Sockel (2.2) und dem Schaft (2.7) ist eine hülsenförmige äußere Seitenwand (2.10) mit einem oberhalb des Schaftes (2.7) am äußeren Umfang nach innen versetzten ersten Sockel (2.8) mit einer Unterseite (2.8.1)_angeordnet,
- das Passungselement (2) weist ein längliches Lumen (2.4, 2.6) mit einem nach innen versetzten zweiten Sockel (2.5) an dem der Durchmesser des Lumens (2.6) des Passungselementes abnimmt auf, das Lumen (2.4, 2.6) verläuft von der Oberseite des Passungselementes bis zur Unterseite,
**dadurch gekennzeichnet, dass**
- der obere Sockel (2.2) des Passungselementes (2) auf der Oberseite (3.4) des Prothesenbasiselementes (3) aufbringbar ist, und
- die Höhe der hülsenförmigen äußeren Seitenwand (2.10) geringer ist als die Höhe des Lumens (3.5) des Prothesenbasiselementes (3), so dass die Sockelunterseite (2.8.1) des nach innen versetzten ersten Sockels (2.8) nicht zur Auflage auf die Implantatstirnseite kommt.

2. Basis nach Anspruch 1, **dadurch gekennzeichnet,**
**dass** durch das Lumen (2.4, 2.6) mit einem nach innen versetzten zweiten Sockel (2.5) ein Befestigungsmittel (7) mit einem Kopf (7.2) einbringbar ist, um die Basis (1) mittels des Passungselementes (2) auf einem Implantat festzulegen, indem der Kopf (7.2) des Befestigungsmittels (7) auf dem nach innen versetzten zweiten Sockel (2.5) zur Auflage kommt und das Befestigungsmittel (7) im Implantat festgelegt wird.

3. Basis nach einem der Ansprüche 1 oder 2, **dadurch gekennzeichnet, dass** das
Prothesenbasiselement (3) am äußeren Umfang zwischen der Oberseite (3.4) und der Unterseite (3.3) eine definierte Oberfläche aufweist, wobei das Prothesenbasiselement (3) einen am äußeren Umfang umlaufenden Sockel (3.6) aufweist.

4. Basis nach einem der Ansprüche 1 bis 3, **dadurch gekennzeichnet, dass** das
Prothesenbasiselement (3) am äußeren Umfang zwischen der Oberseite (3.4) und der Unterseite (3.3) eine definierte Oberfläche aufweist, die umfasst
(i) eine seitliche, äußere Oberfläche (3.7), die sich nach unten erweitert, insbesondere entspricht die Oberfläche (3.7) zumindest teilweise der Mantelfläche eines Kegelstumpfes,
(ii) eine Sockeloberfläche (3.1) eines Sockels (3.6) und
(iii) eine untere seitliche Oberfläche (3.2), die sich nach unten verjüngt, insbesondere entspricht die Oberfläche (3.2) zumindest teilweise der Mantelfläche eine Kegelstumpfes.

5. Basis nach einem der Ansprüche 1 bis 4, **dadurch gekennzeichnet, dass**
a) das Prothesenbasiselement (3) als Material umfasst mindestens ein Metall, eine dentale Legierung, wie Titan, Kobalt-Chrom, Gold, ein Metalloxid, eine dentale Keramik, wie Zirkondioxid, Dilithium-Silikat-Keramik, polymeres Material, wie PEEK, ein gefülltes polymeres Material und/oder eine Anordnung von mindestens zwei der vorgenannten Materialien, und/oder
b) das hülsenförmige Passungselement (2) als Material umfasst mindestens ein Metall, eine dentale Legierung, wie Titan, Kobalt-Chrom, Gold, ein Metalloxid, eine dentale Keramik, wie Zirkondioxid, Dilithium-Silikat-Keramik, polymeres Material, wie PEEK, ein gefülltes polymeres Material und/oder eine Anordnung von mindestens zwei der vorgenannten Materialien.

6. Basis nach einem der Ansprüche 1 bis 5, **dadurch gekennzeichnet, dass** das
Passungselement (2) ein längliches, axial angeordnetes Lumen (2.4, 2.6) aufweist.

7. Basis nach einem der Ansprüche 1 bis 6, **dadurch gekennzeichnet, dass** das hülsenförmige Passungselement (2) zumindest teilweise im Bereich des Lumens (2.6) ein Innengewinde aufweist.

8. Dentale Prothese (0) umfassend mindestens eine flexible Basis (1) nach einem der Ansprüche 1 bis 7, wobei die mindestens eine Basis (1) umfasst
a) ein Prothesenbasiselement (3) und ein in das Lumen (3.5) eingesetztes
b) hülsenförmiges Passungselement (2), und ein im Lumen (2.4, 2.6) angeordnetes Befestigungsmittel (7) sowie eine auf dem Prothesenbasiselement (3) der mindestens einen Basis mit Verbindungsmitteln (5) befestigte prothetische Versorgung (6).

9. Prothese nach Anspruch 8, **dadurch gekennzeichnet, dass** die prothetische Versorgung (6) mindestens zwei bis 16 flexible Basen (1) umfasst.

10. Prothese nach Anspruch 8 oder 9, **dadurch gekennzeichnet, dass** jeweils unabhängig eine Basis (1) als Befestigungsmittel (7) eine Schraube umfasst, insbesondere eine Schraube mit einem Schaft, wobei im terminalen Bereich des Schaftes ein Außengewinde (7.3.1) vorgesehen ist.

11. Prothese nach einem der Ansprüche 8 bis 10, **dadurch gekennzeichnet, dass** die prothetische Versorgung (6) eine dentale Brücke, eine Superstruktur, einen Implantatsteg oder eine Krone umfasst, insbesondere eine Implantat-getragene prothetische Versorgung.

12. Prothese nach einem der Ansprüche 8 bis 11, **dadurch gekennzeichnet, dass** die prothetische Versorgung (6) als Material umfasst mindestens ein Metall, eine dentale Legierung, wie Titan, Kobalt-Chrom, Gold, ein Metalloxid, eine dentale Keramik, wie Zirkondioxid, Dilithium-Silikat-Keramik, polymeres Material, wie PEEK, ein gefülltes polymeres Material und/oder eine Anordnung von mindestens zwei der vorgenannten Materialien.

13. Prothese nach einem der Ansprüche 8 bis 12, **dadurch gekennzeichnet, dass**
(i) das Verbindungsmittel in einem Klebespalt zwischen zervikaler Aufnahme (6.2) und seitlicher, äußerer Oberfläche (3.7) angeordnet ist, und/oder
(ii) das Verbindungsmittel (5) umfasst
a) mindestens eine Schicht eines Adhäsiv auf der seitlichen, äußeren Oberfläche (3.7) und optional der Sockeloberfläche (3.1) und auf der inneren Oberfläche der Aufnahme (6.2) der prothetischen Versorgung (6),
b) einen Verbund umfassend (i) ein erstes Adhäsivs auf der seitlichen, äußeren Oberfläche (3.7) und optional der Sockeloberfläche (3.1), (ii) auf dem ersten Adhäsiv ein Komposit-Zement, und (iii) ein zweites Adhäsiv auf dem Komposit-Zement und auf der inneren Oberfläche der Aufnahme (6.2) der prothetischen Versorgung (6).

14. Prothese nach einem der Ansprüche 8 bis 13, **dadurch gekennzeichnet, dass** das hülsenförmige Passungselement (2) vertikal im Lumen (3.5) des Prothesenbasiselementes (3) beweglich ist, und das Befestigungsmittel im Lumen (2.4, 2.6) mit dem nach innen versetzten zweiten Sockel (2.5) des Passungselementes (2) und/oder im Hohlraum (4.1, 4.2) beweglich ist.

15. Prothese nach einem der Ansprüche 8 bis 14 zur Verwendung zur Befestigung auf mindestens einem enossalen Implantat, insbesondere auf zwei bis 16 enossalen Implantaten oder Laboranalogen, insbesondere mit nach lingual führendem Kanal.

16. Kit umfassend mindestens eine flexible, dentale Basis nach einem der Ansprüche 1 bis 7 und mindestens ein Befestigungsmittel je Basis sowie optional mindestens eine prothetische Versorgung (6).

17. Kit nach Anspruch 16, **dadurch gekennzeichnet, dass** es umfasst mindestens ein Adhäsiv und optional einen dentalen Zement.

18. Prothetische Versorgung (6) umfassend eine flexible dentale Basis (1) nach einem der Ansprüche 1 bis 7 sowie mindestens eine zervikale Aufnahme (6.2) umfassend die Ausnehmung (6.1) zur Aufnahme der Basis (1), sowie einem in der prothetischen Versorgung (6) von der Ausnehmung (6.1) nach lingual führenden Kanal (6.3), wobei der Kanal (6.3) im Übergang zur Ausnehmung (6.1) einen Durchmesser (D1) und im lingualen Bereich einen weiteren Durchmesser (D2) aufweist, und wobei der eine Durchmesser (D1) größer ist als der weitere Durchmesser (D2), **dadurch gekennzeichnet, dass** in jeder Ausnehmung eine Basis umfassend ein Prothesenbasiselement und ein hülsenförmiges Passungselement angeordnet ist.

19. Prothetische Versorgung (6) nach Anspruch 18, **dadurch gekennzeichnet, dass** die prothetische Versorgung mindestens zwei zervikale Aufnahmen, insbesondere drei bis 10 zervikale Aufnahmen, umfasst, wobei jede Aufnahme unabhängig eine Ausnehmung zur Aufnahme jeweils einer Basis nach Anspruch 1 aufweist sowie jede Ausnehmung einen nach lingual oder okklusal führenden Kanal aufweist, wobei mindestens ein Kanal dieser Kanäle in der prothetischen Versorgung von der Ausnehmung nach lingual führt, wobei mindestens dieser Kanal im Übergang zur Ausnehmung einen Durchmesser (D1) und im lingualen Bereich einen weiteren Durchmesser (D2) aufweist, und wobei der eine Durchmesser (D1) größer ist als der weitere Durchmesser (D2).

## Claims

1. Flexible dental base (1) for fastening dental prosthetic restorations (6) on at least one implant (11) or abutment, the base (1) comprising
a) a prosthesis base element (3) and
b) a sleeve-like fitting element (2), and
the prosthesis base element (3) being attachable onto the implant front side of an implant in a custom-fit manner, and having an elongated, axially arranged lumen (3.5) extending from the upper side (3.4) to the lower side (3.3) of the prosthesis base element (3),
- the lumen (3.5) being adapted to receive the sleeve-like fitting element (2), and
- the fitting element (2) having an upper pedestal (2.2) extending at the outer periphery on top at the fitting element (2), as well as a shaft (2.7) restricting the fitting element downwardly,
a sleeve-like outer side wall (2.10) being arranged between the upper pedestal (2.2) and the shaft (2.7), having a first pedestal (2.8) inwardly offset at the outer periphery above the shaft (2.7), having a lower side (2.8.1),
- the fitting element (2) having an elongated lumen (2.4, 2.6) having an inwardly offset second pedestal (2.5), the diameter of the lumen (2.6) of the fitting element decreases at which, the lumen (2.4, 2.6) extending from the upper side of the fitting element to the lower side,
**characterised in that**
- the upper pedestal (2.2) of the fitting element (2) is attachable onto the upper side (3.4) of the prosthesis base element (3), and
- the height of the sleeve-like outer side wall (2.10) is lower than the height of the lumen (3.5) of the prosthesis base element (3), so that the pedestal lower side (2.8.1) of the inwardly offset first pedestal (2.8) is not supported onto the implant front side.

2. Base according to claim 1, **characterised in that** a fastening means (7) having a head (7.2) is insertable through the lumen (2.4, 2.6) having an inwardly offset second pedestal (2.5) to fasten the base (1) onto an implant by means of the fitting element (2) by the head (7.2) of the fastening means (7) being supported onto the inwardly offset second pedestal (2.5) and the fastening means (7) being fastened in the implant.

3. Base according to any one of the claims 1 or 2, **characterised in that** the prosthesis base element (3) has a defined surface at the outer periphery between the upper side (3.4) and the lower side (3.3), the prosthesis base element (3) having a pedestal (3.6) circumferenting at the outer periphery.

4. Base according to any one of the claims 1 to 3, **characterised in that** the prothesis base element (3) has a defined surface at the outer periphery between the upper side (3.4) and the lower side (3.3), comprising
(i) a lateral, outer surface (3.7) enlarging downwardly, in particular the surface (3.7) corresponds at least in part to the lateral surface of a truncated cone,
(ii) a pedestal surface (3.1) of a pedestal (3.6), and
(iii) a lower lateral surface (3.2) tapering downwardly, in particular the surface (3.2) corresponds at least in part to the lateral surface of a truncated cone.

5. Base according to any one of the claims 1 to 4, **characterised in that**
a) the prosthesis base element (3) comprises as material at least one metal, a dental alloy, such as titanium, cobalt-chromium, gold, a metal oxide, a dental ceramic, such as zirconium oxide, dilithium disilicate ceramic, polymeric material, such as PEEK, a filled polymeric material and/or an assembly of at least two of the aforementioned materials, and/or
b) the sleeve-like fitting element (2) comprises as material at least one metal, a dental alloy, such as titanium, cobalt-chromium, gold, a metal oxide, a dental ceramic, such as zirconium oxide, dilithium disilicate ceramic, polymeric material, such as PEEK, a filled polymeric material and/or an assembly of at least two of the aforementioned materials.

6. Base according to any one of the claims 1 to 5, **characterised in that** the fitting element (2) has an elongated, axially arranged lumen (2.4, 2.6).

7. Base according to any one of the claims 1 to 6, **characterised in that** the sleeve-like fitting element (2) has an inside thread at least in part in the region of the lumen (2.6).

8. Dental prosthesis (0) comprising at least one flexible base (1) according to any one of the claims 1 to 7, the at least one base (1) comprising
a) a prosthesis base element (3) and a
b) sleeve-like fitting element (2) inserted into the lumen (3.5), and a fastening means (7) arranged in the lumen (2.4, 2.6) as well as a prosthetic restoration (6) fastened onto the prosthesis base element (3) of the at least one base by means of connection means (5).

9. Prosthesis according to claim 8, **characterised in that** the prosthetic restoration (6) comprises at least two to 16 flexible bases (1).

10. Prosthesis according to claim 8 or 9, **characterised in that**, each independently, a base (1) comprises a screw as fastening means (7), in particular a screw having a shaft, an outside thread (7.3.1) being provided in the terminal region of the shaft.

11. Prosthesis according to any one of the claims 8 to 10, **characterised in that** the prosthetic restoration (6) comprises a dental bridge, a superstructure, an implant bar or a crown, in particular an implant-supported prosthetic restoration.

12. Prosthesis according to any one of the claims 8 to 11, **characterised in that** the prosthetic restoration (6) comprises as material at least one metal, a dental alloy, such as titanium, cobalt-chromium, gold, a metal oxide, a dental ceramic, such as zirconium dioxide, dilithium silicate ceramic, polymeric material, such as PEEK, a filled polymeric material and/or an assembly of at least two of the aforementioned materials.

13. Prosthesis according to any one of the claims 8 to 12, **characterised in that**
(i) the connection means is arranged in an adhesive gap between cervical receptacle (6.2) and lateral, outer surface (3.7), and/or
(ii) the connection means (5) comprises
a) at least one layer of an adhesive on the lateral, outer surface (3.7) and optionally the pedestal surface (3.1) and on the inner surface of the receptacle (6.2) of the prosthetic restoration (6),
b) a bond comprising (i) a first adhesive on the lateral, outer surface (3.7) and optionally the pedestal surface (3.1), (ii) a composite cement on the first adhesive, and (iii) a second adhesive on the composite cement and on the inner surface of the receptacle (6.2) of the prosthetic restoration (6).

14. Prosthesis according to any one of the claims 8 to 13, **characterised in that** the sleeve-like fitting element (2) is vertically movable in the lumen (3.5) of the prosthesis base element (3), and the fastening means is movable in the lumen (2.4, 2.6) having the inwardly offset second pedestal (2.5) of the fitting element (2) and/or in the cavity (4.1, 4.2).

15. Prosthesis according to any one of the claims 8 to 14 for use for fastening on at least one enossal implant, in particular on two to 16 enossal implants or laboratory analogues, in particular having a conduit leading towards lingual.

16. Kit comprising at least one flexible dental base according to any one of the claims 1 to 6 and at least one fastening means per base, as well as optionally at least one prosthetic restoration (6).

17. Kit according to claim 16, **characterised in** comprising at least one adhesive and optionally a dental cement.

18. Prosthetic restoration (6) comprising a flexible dental base (1) according to any one of the claims 1 to 7 as well as at least one cervical receptacle (6.2) comprising the recess (6.1) to receive the base (1), as well as a conduit (6.3) leading in the prosthetic restoration (6) from the recess (6.1) towards lingual, the conduit (6.3) having one diameter (D1) in the transition to the recess (6.1) and a further diameter (D2) in the lingual region, and the one diameter (D1) being larger than the further diameter (D2), **characterised in that** a base comprising a prosthesis base element and a sleeve-like fitting element is arranged in each recess.

19. Prosthetic restoration (6) according to claim 18, **characterised in that** the prosthetic restoration comprises at least two cervical receptacles, in particular three to 10 cervical receptacles, each receptacle independently having a recess to receive respectively one base according to claim 1, as well as each recess having a conduit leading towards lingual or occlusal, at least one conduit of said conduits leading in the prosthetic restoration from the recess towards lingual, at least said conduit having one diameter (D1) in the transition to the recess and a further diameter (D2) in the lingual region, and the one diameter (D1) being larger than the further diameter (D2).

## Revendications

1. Base dentaire flexible (1) pour fixer des restaurations prothétiques dentaires (6) sur au moins un implant (11) ou pilier, la base (1) comprenant
a) un élément de base de prothèse (3) et
b) un élément adaptant (2) en forme de douille, et
l'élément de base de prothèse (3) étant attachable sur le côte frontal d'implant d'un implant de manière sur mesure, et ayant un lumen élongé arrangé axialement (3.5) étendant à partir du côté supérieur (3.4) au côté inférieur (3.3) de l'élément de base de prothèse (3),
- le lumen (3.5) étant adapté à accueillir l'élément adaptant (2) en forme de douille, et
- l'élément adaptant (2) ayant un piédestal supérieur (2.2) étendant à la périphérie extérieure en haut à l'élément adaptant (2), ainsi qu'une tige (2.7) restreignant l'élément adaptant vers la baisse,
une parois latérale extérieure (2.10) en forme de douille étant arrangée entre le piédestal supérieur (2.2) est la tige (2.7), ayant un premier piédestal (2.8) décalé vers l'intérieur à la périphérie extérieure au-dessus de la tige (2.7), ayant un côté inférieure (2.8.1),
- l'élément adaptant (2) ayant un lumen allongé (2.4, 2.6) ayant un deuxième piédestal (2.5) décalé vers l'intérieure, auquel le diamètre du lumen (2.6) de l'élément adaptant diminue, le lumen (2.4, 2.6) étendant à partir du côté supérieur de l'élément adaptant au côté inférieur,
**caractérisée en ce que**
- le piédestal supérieur (2.2) de l'élément adaptant (2) est attachable sur le côté supérieur (3.4) de l'élément de base de prothèse (3), et
- la hauteur de la parois latérale extérieure (2.10) en forme de douille est inférieur que la hauteur du lumen (3.5) de l'élément de base de prothèse (3), de sorte que le côté inférieur de piédestal (2.8.1) du premier piédestal (2.8) décalé vers l'intérieur n'est pas supporté sur le côté frontal de l'implant.

2. Base selon la revendication 1, **caractérisée en ce qu'**un moyen de fixation (7) ayant une tête (7.2) est insérable à travers le lumen (2.4, 2.6) ayant un deuxième piédestal (2.5) décalé vers l'intérieur à fixer la base (1) sur un implant par moyen de l'élément adaptant (2) par la tête (7.2) du moyen de fixation (7) étant supportée sur le deuxième piédestal (2.5) décalé vers l'intérieur et le moyen de fixation (7) étant fixé dans l'implant.

3. Base selon l'une des revendications 1 à 2, **caractérisée en ce que** l'élément de base de prothèse (3) a une surface définie à la périphérie extérieure entre le côté supérieur (3.4) et le côté inférieur (3.3), l'élément de base de prothèse (3) ayant un piédestal (3.6) circulant à la périphérie extérieure.

4. Base selon l'une des revendications 1 à 3, **caractérisée en ce que** l'élément de base de prothèse (3) a une surface définie à la périphérie extérieure entre le côté supérieure (3.4) et le côté inférieur (3.3), comprenant
(i) une surface extérieure latérale (3.7) élargissant vers la baisse, en particulière la surface (3.7) correspond au moins en partie à la surface latérale d'un cône tronqué,
(ii) une surface de piédestal (3.1) du piédestal (3.6), et
(iii) une surface latérale inférieure (3.2) affilant vers la baisse, en particulière la surface (3.2) correspond au moins en partie à la surface latérale d'un cône tronqué.

5. Base selon l'une des revendications 1 à 4, **caractérisée en ce que** a) l'élément de base de prothèse (3) comprend comme matériau au moins un métal, un alliage dentaire, telle que le titanium, le chrome-cobalt, l'or, un oxyde de métal, une céramique dentaire, telle que le dioxyde de zirconium, de céramique à silicate de dilithium, de matériau polymérique, telle que PEEK, un matériau polymérique chargé et/ou une ensemble de l'au moins deux des matériaux susmentionnés, et/ou b) l'élément adaptant (2) en forme de douille comprend comme matériau au moins un métal, un alliage dentaire, telle que le titanium, le chrome-cobalt, l'or, un oxyde de métal, une céramique dentaire, telle que le dioxyde de zirconium, de céramique à silicate de dilithium, de matériau polymérique, telle que PEEK, un matériau polymérique chargé et/ou une ensemble de l'au moins deux des matériaux susmentionnés.

6. Base selon l'une des revendications 1 à 5, **caractérisée en ce que** l'élément adaptant (2) a un lumen allongé arrangé axialement (2.4, 2.6).

7. Base selon l'une des revendications 1 à 6, **caractérisée en ce que** l'élément adaptant (2) en forme de douille a un filetage intérieur au moins en partie dans la région du lumen (2.6).

8. Prothèse dentaire (0) comprenant au moins une base flexible (1) selon l'une des revendications 1 à 7, l'au moins une base (1) comprenant
a) un élément de base de prothèse (3) et un
b) élément adaptant (2) en forme de douille inséré dans le lumen (3.5), et un moyen de fixation (7) arrangé dans le lumen (2.4, 2.6) ainsi qu'une restauration prothétique (6) fixée sur l'élément de base de prothèse (3) de l'au moins une base par des moyens de connexion (5).

9. Prothèse selon la revendication 8, **caractérisée en ce que** la restauration prothétique (6) comprend au moins deux à 16 bases flexibles (1).

10. Prothèse selon la revendication 8 ou 9, **caractérisée en ce que**, chacune indépendamment, une base (1) comprend une vis en tant qu'un moyen de fixation (7), en particulière une vis ayant une tige, une filetage extérieure (7.3.1) étant fournie dans la région terminale de la tige.

11. Prothèse selon l'une des revendications 8 à 10, **caractérisée en ce que** la restauration prothétique (6) comprend un bridge dentaire, une superstructure, une barre d'implant ou une couronne, en particulière une restauration prothétique implanto-portée.

12. Prothèse selon l'une des revendications 8 à 11, **caractérisée en ce que** la restauration prothétique (6) comprend comme matériau au moins un métal, un alliage dentaire, telle que le titanium, le chrome-cobalt, l'or, un oxyde de métal, une céramique dentaire, telle que le dioxyde de zirconium, de céramique à silicate de dilithium, de matériau polymérique, telle que PEEK, un matériau polymérique chargé et/ou une ensemble de l'au moins deux des matériaux susmentionnés.

13. Prothèse selon l'une des revendications 8 à 12, **caractérisé en ce que**
(i) le moyen de connexion est arrangé dans une fente d'adhésif entre l'accueil cervical (6.2) et la surface extérieure latérale (3.7), et/ou
(ii) le moyen de connexion (5) comprend
a) au moins une couche d'un adhésif sur la surface extérieure latérale (3.7) et facultativement la surface de piédestal (3.1) et sur la surface intérieure de l'accueil (6.2) de la restauration prothétique (6),
b) un lien comprenant (i) un premier adhésif sur la surface extérieure latérale (3.7) et facultativement la surface de piédestal (3.1), (ii) une cément de composite sur le premier adhésif, et (iii) un deuxième adhésif sur le cément de composite et sur la surface intérieure de l'accueil (6.2) de la restauration prothétique (6).

14. Prothèse selon l'une des revendications 8 à 13, **caractérisée en ce que** l'élément adaptant (2) en forme de douille est mobile verticalement dans le lumen (3.5) de l'élément de base de prothèse (3), est le moyen de fixation est mobile dans le lumen (2.4, 2.6) ayant le piédestal (2.5) décalé vers l'intérieur de l'élément adaptant (2) et/ou dans la cavité (4.1, 4.2).

15. Prothèse selon l'une des revendication 8 à 14 pour utilisation pour fixer sur au moins un implant endo-osseux, en particulier sur deux à 16 implants endo-osseux ou analogues laboratoires, en particulier ayant un conduit conduisant vers lingual.

16. Kit comprenant au moins une base dentaire flexible selon l'une des revendications 1 à 6 et au moins un moyen de fixation par base, ainsi que facultativement au moins une restauration prothétique (6).

17. Kit selon la revendication 16, **caractérisée** en comprendre au moins un adhésif et facultativement un cément dentaire.

18. Restauration prothétique (6) comprenant une base dentaire flexible (1) selon l'une des revendications 1 à 7 ainsi qu'au moins un accueil cervical (6.2) comprenant l'encoche (6.1) à accueillir la base (1), ainsi que un conduit (6.3) conduisant dans la restauration prothétique (6) à partir de l'encoche (6.1) vers lingual, le conduit (6.3) ayant un diamètre (D1) dans la transition à l'encoche (6.1) et un autre diamètre (D2) dans la région linguale, et l'un diamètre (D1) étant plus grand que l'autre diamètre (D2), **caractérisée en ce que** une base comprenant un élément de base de prothèse et un élément adaptant en forme de douille est arrangée dans chaque encoche.

19. Restauration prothétique (6) selon la revendication 18, **caractérisée en ce que** la restauration prothétique comprend au moins deux accueilles cervicales, en particulier trois à 10 accueilles cervicales, chaque accueil ayant indépendamment une encoche à accueillir respectivement une base selon la revendication 1, ainsi que chaque encoche ayant un conduit conduisant vers lingual ou occlusal, au moins un conduit desdites conduits conduisant dans la restauration prothétique à partir de l'encoche vers lingual, au moins ledit conduit ayant un diamètre (D1) dans la transition à l'encoche et un autre diamètre (D2) dans la région linguale, et l'une diamètre (D1) étant plus grand que l'autre diamètre (D2).
